# EUROPEAN PATENT APPLICATION

(11) **EP 1 172 748 A2**
(43) Date of publication of application: **16.01.2002**
(21) Application number: 01117101.4
(22) Date of filing: 13.07.2001
(51) Int. Cl.: G06F 17/60

(54) **Real-time internet feed for promoting sales**

(30) Priority: 13.07.2000 US 615214
(71) Applicant: Follow YourStars AG, 50670 Köln (DE)
(72) Inventor: Bertoni, Alain, 50767 Köln (DE); Hamm, Christian, 50668 Köln (DE)
(74) Representative: Freischem, Stephan, Dipl.-Ing.

(57) **Abstract**

Promoting sales of products relating to a performing artist includes operating at least one camera in the vicinity of the performing artist to provide a real-time stream of video data, continuously feeding the real-time stream of video data into a computer connected to a communication network, and providing a first address in the communication network to view the real-time stream of video data and to provide for ordering at least one product relating to the performing artist. The stream of video data may be fed to the computer via radio transmission. At least one camera may be directed onto the performing artist and operated by at least one camera man. At least one camera may be attached to the body of the performing artists and operated automatically. At least one camera may be attached to the body of the performing artists and remotely operated via a radio remote control device. At least one camera may be attached to the body of the performing artist and operated automatically.

## Description

### Background of The Invention

### 1. Field of the Invention

This application relates to the field of promoting the sales of products using a computer system.

### 2. Description of Related Art

A rising number of performing artists, such as musicians and movie actors, offer commercially distributed products (sound recordings, T-shirts and other promotional clothing etc.) on their personal homepage via Internet. The public, especially young spectators and fans, may prefer to use Internet homepages for ordering products relating to the performing artists since it is also possible to receive personal information about the performing artist at the same time.

It is desirable to render the promotion of sales more attractive to the consumers on the Internet.

### Summary Of The Invention

According to the present invention, promoting sales of products relating to a performing artist includes operating at least one camera in the vicinity of the performing artist to provide a real-time stream of video data, feeding the real-time stream of video data into a computer connected to a communication network, and providing a first address in the communication network to view the real-time stream of video data and to provide for ordering at least one product relating to the performing artist. The stream of video data may be fed to the computer via radio transmission. Further included may be continuously operating at least one microphone in the vicinity of the performing artist, and providing the recorded sound data together with the stream of video data.

At least one camera may be directed onto the performing artist and operated by at least one camera man. At least one camera may be attached to the body of the performing artists and operated automatically. At least one camera may be attached to the body of the performing artists and remotely operated via a radio remote control device. At least one camera may be attached to the body of the performing artist and operated automatically. A computer in the vicinity of the performing artist may receive data sent from a computer of at least one user via the communications.

Further included may be capturing video display data of a video display associated with the performing artist, providing the video display data into a computer connected to the communication network, and providing a second address in the communication network which delivers the video display data. The first address may be the same as the second address. The video display data may represent a video game played by the performing artist on a computer and the computer may receive control signals sent from at least one user, the control signals controlling the course of the video game.

Ordering at least one product relating to the performing artist may include providing a data stream representing the product, the data stream being transferred from a server-computer via the communication network to a computer of the user. Ordering at least one product relating to the performing artist may include requesting transmission of a delivery address for the ordered product and transferring the delivery address and the product information to a mailing center for mailing the product to the delivery address. Ordering at least one product relating to the performing artist may include requesting transmission via the communication network of at least one of the following: bank account number for debiting the price of the ordered product and credit card number for charging the price of the ordered product.

According further to the present invention, a system for promoting sales of products relating to a performing artist over a network, includes a first computer, coupled to the network to provide a real-time stream of video data corresponding to at least one camera in the vicinity of the performing artist and a second computer, coupled to the network to provide for ordering at least one product relating to the performing artist. The system may also include a third computer, coupled to the network to allow the user to play an interactive video game with the performing artist. The system may also include at least one microphone, coupled to the first computer to provide sound data to the network.

The system described herein may provide a continuous survey of the life of the performing artist. This survey may extend over at least one day. This event may be announced via regular commercializing channels (television, radio, newspapers, etc.). If the period of observation extends over a longer period of time (at least several weeks) it allows the fans of the artist to participate in his life and to "log" their computer into the every day routine of their idol anytime of the day.

If the system described herein is applied to a group of performing artists, especially a music group, it may be sufficient to observe at least one member of this group. All group members may then take turns so that the audience receives a continuous video data feed but each of the members of the group is surveyed only for a fraction of the complete time of the observation.

As the observation camera follows the performing artists it will be convenient to feed the video data stream into the net server via a radio transmission link. In some embodiments it is preferable to record the sound in the vicinity of the artists together with the video images. A cameraman may follow the artist to be observed with a camera directed onto the artist. Alternatively it would be possible to attach the camera to the body of the artist. Very small cameras which are part of a pair of sun glasses or which arc attached to a clothing article are already known. The cameras may then be operated automatically or via a radio remote control device by an operator who does not have to move with the camera. As mentioned above, the signals from the camera may be transmitted via a radio link.

In addition to images captured by a camera directed onto the body of the performing artist or fixed to his body it is possible to feed video data of a video game played by the artist into the internet. It is also possible to feed the images of a television program watched by the artist into the Internet. The alternative feed may be sent either exclusively or in parallel with the pictures of the camera whenever the performing artist plays a video game or watches television.

For the sale of the products related to the performing artist, any appropriate sales means used in electronic commerce may be used. If a user orders a music recording, it is possible to transfer a data file containing the music data via the Internet in an appropriate data format (e.g. MPEG3). The same applies to the data of music videos. If the computer of the user has access to a wide band data transmission line (e.g. satellite transmission) a music video may be transferred in high quality (e.g. as an MPEG2-file) via this line. The same applies to short television sequences or complete movies.

If a user orders a physical product, he may be requested to transmit his delivery address. Upon activating the order means (ordering icon) the delivery address as well as an identifier directed to the ordered product(s) is then transmitted to a mailing center so that the ordered product(s) can be sent to the delivery address via mail.

Payment of the ordered products may be effected in any known fashion, e.g. debiting from a bank account or a credit card.

It is understood that the proposed method may make use of any communication network, such as the Internet. However, the data transfer may take place via any terrestrial or orbit bound communication network using any appropriate file transfer format.

### Brief Description Of Drawings

Figure 1 is illustrates a home page having features of the system described herein.

Figure 2 is a schematic diagram illustrating a system for implementing the features described herein.

### Detailed Description of the Preferred Embodiment(s)

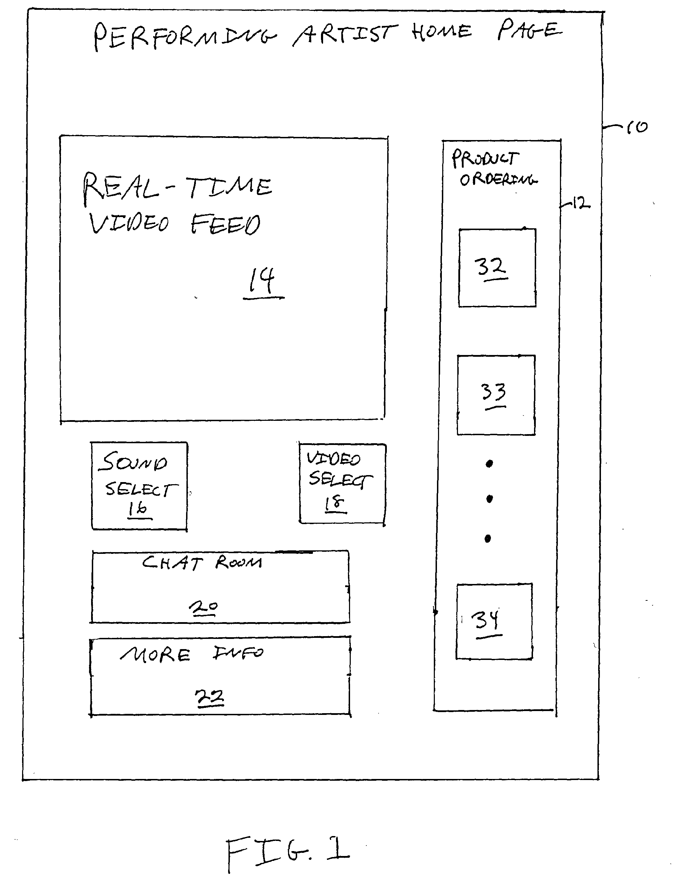

Referring to Figure 1, a performing artist home page 10 may be made available on a computer network, such as the Internet. The home page 10 may be accessed over the network by a user coupled to the Internet in a conventional manner by an Internet Service Provider (not shown) using a conventional browser (not shown), provided by, for example, Netscape or Microsoft. The user accesses the home page 10 by specifying the URL of the home page 10 to the browser by either typing in the URL and/or by any other suitable mechanism, such as using a bookmark, a search engine, etc.

The home page 10 includes a product ordering section 12, a real time video feed section 14, a sound select section 16, a video select section 18, a chat room section 20, and a more info section 22. In other embodiments, the sections 12, 14, 16, 18, 20, 22 may be arranged differently than that shown on the home page 10. For instance, in other embodiments, the sections 12, 14, 16, 18, 20, 22 may be arranged on different pages that may or may not be linked together directly or indirectly so that different subsets of the sections 12, 14, 16, 18, 20, 22 are provided on different pages. In addition, one of ordinary skill in the art may appreciate that the system described herein may be implemented using some, but not all, of the sections 12, 14, 16, 18, 20, 22.

The product ordering section 12 includes a plurality of subsections 32-34, each of which may include conventional buttons, displays, links, icons, etc. to facilitate ordering products associated with the performing artist and/or perhaps other products. The products may include, for example, t-shirts, baseball caps, badges, etc. with the name of the artist provided thereon. The products may also include music, videos, etc. of the performing artist or of other artists. The subsections 32-34 facilitate ordering the products in a conventional manner, such as by using a combination of buttons, displays, icons, links, etc. to present the various products to a user, provide the user with appropriate interactive pages to facilitate on-line purchasing in a conventional manner by, for example, debiting the purchase price from the user's bank account or a credit card, and then obtaining the user's address for shipment. In instances where the product being ordered is data in electronic format (e.g., music and/or video data), the data may be electronically transferred to the user in a conventional manner using any one of a variety of appropriate data formats (e.g., MPEG3). In instances where a user has access to wide band transmission (e.g., via satellite or cable modem connection), a greater amount of data may be transferred in a high quality format, such as MPEG2.

The home page 10 also includes a real-time video feed section 14 that may display one or more video sequences to the user. The display of real-time video data is known in the art. As discussed in more detail below, the real-time video feed section 14 provides real-time video frames related to the performing artist. In the event that the home page 10 is associated with a group of performing artists, the real-time video feed section 14 may provide real-time video data related to members of the group. In some embodiments, the real-time video feed section 14 is provided by having a cameraman continuously follow the performing artist or artists. Alternatively, a camera may be mounted and/or carried by the artist or artists. Very small cameras, such as cameras that are part of a pair of sunglasses or attached to clothing, are known. In some instances, the real-time video feed section 14 includes multiple video feeds of, for example, multiple artists of a performing group and/or different camera angles of the same artist or artists. The multiple video feeds may be presented in the real time video feed section 14 simultaneously and/or may be time multiplexed to show one or more of the video feeds at a time.

The system described herein may provide a continuous survey of the life of the performing artist. This survey may extend over at least one day. The event may be announced via regular commercializing channels (television, radio, newspapers, etc.). If the period of observation extends over a longer period of time (at least several weeks) it allows the fans of the artist to participate in his life and to "log" their computer into the every day routine of their idol anytime of the day. If the system described herein is applied to a group of performing artists, especially a music group, it may be sufficient to observe at least one member of this group. All group members may then take turns so that the audience receives a continuous video data feed, but each of the members of the group may also be surveyed only for a fraction of the complete time of the observation.

The home page 10 also includes a sound select section 16 that controls sound associated with the real-time video feed section 14 and/or other sounds associated with the performing artist or artist. Providing sounds in this manner is known in the art. In some embodiments, the sound select section 16 provides a user with a conventional mechanism (e.g., clickable buttons) that allows the user to turn on or off the sound from the real-time video feed. In instances where there are multiple video feeds provided in the real-time video feed section 14, the sound select section 16 may allow the user to select to receive sound from one of the video feeds provided in the real-time video feed section 14. In some embodiments, the user may receive sound from more than one of the video feeds and/or other sounds at the same time.

The video select section 18 may be used to control the real-time video feed section 14. The video select section 18 may include conventional means (e.g., user-actuatable buttons) to allow the user to select from among a plurality of video feeds provided to the real-time video feed section 14. For example, in instances where the real-time video feed section 14 only shows one video feed at a time, but multiple video feeds exist, then the video select section 18 may be used to select from among the plurality of video feeds to show one of the video feeds in the real-time video feed section 14. In instances where it is possible to view multiple video feeds in the real-time video feed section 14, the video select section 18 may be used to simultaneously receive more than one of the sounds associated therewith along with possibly other sounds.

The chat room section 20 provides a mechanism for users to interact with the performing artist and/or with other users. In some embodiments, the user may type questions and/or any other messages into the chat room section 20 and then the performing artist could respond by either typing an answer or could respond by simply talking (since the artist is being monitored). The functionality of typing in messages into the chat room section 20, and reading the messages, is provided in a conventional manner.

The more info section 22 provides a mechanism for a user to obtain more information about the performing artist and/or other, perhaps related, topics. In some embodiments, the additional information is provided directly in the more info section 22. Alternatively, the more info section 22 may contain conventional user-actuatable means (e.g., user-actuatable buttons) that allow the user to go to other pages linked to the home page 10. Alternatively still, it may be possible to include links to other URLs for other pages so that a user may click on a hyperlink in the more info section 22 and be connected to a different site that is perhaps on a different server.

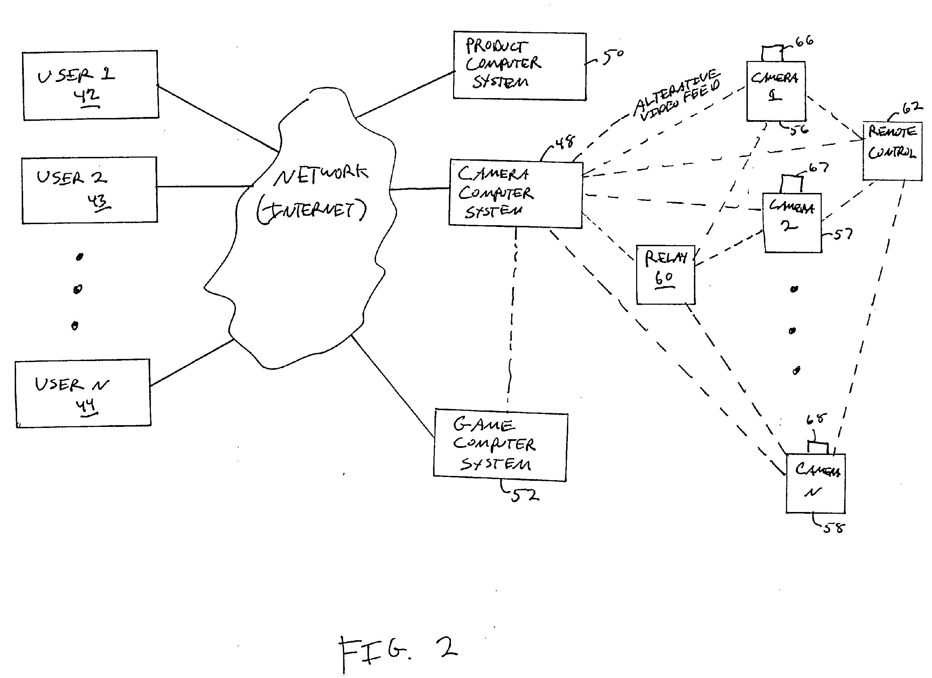

Referring to Figure 2, a system 40 contains various components for implementing the features discussed herein. The system 40 includes a plurality of users 42-44 that access a network, such as the Internet, in a conventional manner through Internet service providers (not shown).

Also connected to the network is a camera computer system 48, a product computer system 50, and a game computer system 52. The computer systems 48, 50, 52 may be conventional Web servers that are programmed in a conventional manner to provide the functionality discussed herein. The camera computer system 48 handles providing the video feeds to the network so that the video feed data may be subsequently provided to the users 42-44. The product computer system 50 handles product orders made by users 42-44 who access the product ordering section 12 of the home page 10. The game computer system 52 may be used by the users 42-44 to play video games either among each other or, possibly, with the performing artist.

A connection between the camera computer system 48 and the game computer system 52 illustrates that coordination may be maintained between the two computer systems 48-52, as described in more detail below. In some embodiments, some or all of the computer systems 48, 50, 52 may be combined into a single computer system or, in some embodiments, less than three computer systems as shown in Figure 2. Similarly, the functionality of each of the computer systems 48, 50, 52 may be distributed in a manner different than that illustrated herein without departing from the spirit and scope of the invention. The computer systems 48, 50, 52 may be in the same physical location or may be distributed in different locations. The computer systems 48, 50, 52 may be coupled to the network, such as the Internet, in a conventional manner, such as through one or more Internet service providers (not shown).

A plurality of cameras 56-58 provide video feed data in a conventional manner either directly to the camera computer system 48 or indirectly via a relay 60. The relay 60 may be implemented as a plug in board or as a stand-alone device. In some embodiments the relay 60 may be part of the camera computer system 48. As discussed above, the cameras 56-58 may be mounted on one or more of the performing artists, such as by eyeglasses, or, alternatively, may be operated by cameramen who train the lens of the camera on each of the performing artists. In some embodiments, more than one of the cameras 56-58 may be trained on one performing artist. In other embodiments, each of the cameras 56-58 may be trained on different performing artists. As discussed above, the multiple video feeds may be viewed by the user simultaneously (e.g., side-by-side), may be displayed one at a time as selected by the user. or some combination thereof.

The cameras 56-58 may also be controlled by a conventional remote control 62 that causes the cameras to point at an appropriate location without operator(s) having to physically move the cameras 56-58 and/or move with the cameras 56-58. The remote control 62 may be radio controlled in a conventional manner. In some embodiments, the remote control 62 may be operated by the performing artist, a colleague of the performing artist, or another person. The operator may be located in the same place as the subject or,'alternatively, the operator may be located remotely and, possible, may view the subject using the video feed(s) over the Internet. Alternatively still, the remote control 62 may be operated by one of the users 42-44, possibly chosen at random, or may be trained on a particular area based on the cumulative effect of inputs by all of the users 42-44 (e.g., some sort of voting).

Each of the cameras 56-58 may have associated therewith one or more of a plurality of microphones 66-68. Thus the video feed information from the cameras 56-58 may include sound information and/or the sound information may be provided on a separate channel. Note that it is not necessary to have the microphone 66-68 associated directly or one-for-one with the cameras 56-58. For example, the microphone 66 may be located closer to a source of sound than the camera 56, which may be positioned at a location that is remote from the source of the sound.

One or more of the cameras 56-58 may communicate with the camera computer system 48 in a conventional manner using radio waves and/or by being hardwired thereto. In embodiments that employ the relay 60, it may be possible for one or more of the cameras 56-58 to communicate with the relay 60 in a conventional manner via radio waves while the relay 60 is hardwired to the camera computer system 48.

In instances where at least one of the users 42-44 wants to play a video game, the game computer system 52 may be activated and another video feed may be provided by the game computer system 52 to the home page 10. In some embodiments, the video feed from the game computer system 52 may replace one or more of the video feeds from the camera computer system 48. A communication link therebetween may be provided to facilitate this. Selecting between the video feed provided by the camera computer system 48 and the video feed provided by the game computer system 52 may be provided in a conventional manner by, for example, using conventional hardware and software that allows selection between alternative video feeds. Note that it is also possible to simultaneously provide a video feed from the camera computer system 48 and the game computer system 52, in which case multiple video feeds may be displayed in the real-time video feed section 14 of the home page 10, as discussed above. One or more of the users 42-44 may participate in the game by providing control signals over the network (or by other known means). Such interactive video games are known.

An alternative video feed may be provided to the camera computer system 48 as yet another source of video information. The alternative video feed may be, for example, a television video feed. In instances where the performing artist is watching a television program, it may be possible to have the alternative video feed correspond to the television program being watched by the performing artist, along with possibly the sound. In those cases, the camera computer system 48 may provide the signal from the alternative video feed to the home page 10 via the network.

The product computer system 50 provides a conventional mechanism for facilitating ordering of products by the users 42-44. Upon activation, the delivery address (electronic address and/or physical location), as well as data identifying the ordered product(s) is transmitted to a mailing center so that the products may be mailed and/or, in the case of electronic data, a confirmation may be mailed to the purchaser.

Note that although the system has been described in connection with a performing artist or artists and corresponding promotional items, in may be adapted for use with other types of individuals wishing to promote corresponding products. Note also that, although the system has been described herein in connection with use of the Internet, it may be appreciated by one of ordinary skill in the art that the invention may be adapted for use on other networks using any appropriate file transfer format.

While the invention has been disclosed in connection with the preferred embodiments shown and described in detail, various modifications and improvements thereon will become readily apparent to those skilled in the art. Accordingly, the spirit and scope of the present invention is to be limited only by the following claims.

## Claims

1. A method for promoting sales of products relating to a performing artist, comprising:
operating at least one camera in the vicinity of the performing artist to provide a real-time stream of video data;
feeding the real-time stream of video data into a computer connected to a communication network; and
providing a first address in the communication network to view the real-time stream of video data and to provide for ordering at least one product relating to the performing artist.

2. A method according to claim 1, wherein the stream of video data is fed to the computer via radio transmission.

3. A method, according to claim 1, further comprising:
continuously operating at least one microphone in the vicinity of the performing artist; and
providing the recorded sound data together with the stream of video data.

4. A method, according to claim1, wherein at least one camera is directed onto the performing artist and operated by at least one camera man.

5. A method, according to claim1, wherein at least one camera is attached to the body of the performing artists and operated automatically.

6. A method, according to claim 1, wherein at least one camera is attached to the body of the performing artists and remotely operated via a radio remote control device.

7. A method, according to claim 1, wherein at least one camera is attached to the body of the performing artist and operated automatically.

8. A method, according to claim 1, wherein a computer in the vicinity of the performing artist receives data sent from a computer of at least one user via the communications.

9. A method, according to claim 1, further comprising:
capturing video display data of a video display associated with the performing artist;
providing the video display data into a computer connected to the communication network; and
providing a second address in the communication network which delivers the video display data.

10. A method, according to claim 9, wherein the first address is the same as the second address.

11. A method, according to claim 9, wherein the video display data represents a video game played by the performing artist on a computer and wherein the computer receives control signals sent from at least one user, the control signals controlling the course of the video game.

12. A method, according to claim 1, wherein ordering at least one product relating to the performing artist includes providing a data stream representing the product, the data stream being transferred from a server-computer via the communication network to a computer of the user.

13. A method, according to claim 1, wherein ordering at least one product relating to the performing artist includes requesting transmission of a delivery address for the ordered product and transferring the delivery address and the product information to a mailing center for mailing the product to the delivery address.

14. A method, according to claim 1, wherein ordering at least one product relating to the performing artist includes requesting transmission via the communication network of at least one of the following: bank account number for debiting the price of the ordered product and credit card number for charging the price of the ordered product.

15. A system for promoting sales of products relating to a performing artist over a network, comprising:
a first computer, coupled to the network to provide a real-time stream of video data corresponding to at least one camera in the vicinity of the performing artist; and
a second computer, coupled to the network to provide for ordering at least one product relating to the performing artist.

16. A system, according to claim 15, further comprising:
a third computer, coupled to the network to allow the user to play an interactive video game with the performing artist.

17. A system, according to claim 15, further comprising:
at least one microphone, coupled to the first computer to provide sound data to the network.
